# EUROPEAN PATENT APPLICATION

(11) **EP 4 440 119 A1**
(43) Date of publication of application: **02.10.2024**
(21) Application number: 23787565.3
(22) Date of filing: 06.04.2023
(51) Int. Cl.: H04N 21/431

(54) **VIDEO PROCESSING METHOD AND APPARATUS, DEVICE AND STORAGE MEDIUM**

(30) Priority: 11.04.2022 CN 202210377244
(71) Applicant: Beijing Zitiao Network Technology Co., Ltd., Beijing 100190 (CN)
(72) Inventor: ZHANG, Kai, Beijing 100028 (CN); LU, Jing, Beijing 100028 (CN); GUO, Yao, Beijing 100028 (CN)
(74) Representative: Dentons UK and Middle East LLP
(86) International application number: PCT/CN2023/086443
(87) International publication number: WO 2023/197920

(57) **Abstract**

The present disclosure provides a video processing method and apparatus, a device and a storage medium; the method comprises: in response to a trigger operation acting on a preset title area of a video playback page, displaying a title detail page according to a preset display style; the preset title area displaying therein title description information of a target video; displaying on the title detail page a multimedia resource entrance associated with the target video, and at least one function link entrance; the associated multimedia resource entrance being used for triggering a jump from the title detail page to a multimedia resource display page, and the function link entrance being used for triggering a jump from the title detail page to a function page corresponding to the function link entrance.

## Description

### CROSS-REFERENCE TO RELATED APPLICATIONS

This application is based on and claims the benefit of priority to the Chinese patent application No. 202210377244.6 filed on April 11, 2022, which is hereby incorporated by reference in its entirety into the present application.

### TECHNICAL FIELD

The present disclosure relates to the field of data processing, in particular to a video processing method, apparatus, device and a storage medium.

### BACKGROUND

The video playback page not only carries the function of video playback, but also carries the function of presenting the information related to video at the same time. In the related art, the information displayed on the video playback page is diverse and complicated.

### SUMMARY

In a first aspect, the present disclosure provides a video processing method, comprising:
displaying a title detail page according to a preset display style, in response to a triggering operation on a preset title area on a video playback page, wherein title description information of a target video is presented on the preset title area; and
presenting an associated multimedia resource entry and at least one function link entry of the target video on the title detail page, wherein the associated multimedia resource entry is configured to trigger jumping from the title detail page to a multimedia resource presentation page corresponding to the associated multimedia resource entry, the multimedia resource presentation page is configured to present a multimedia resource associated with the target video, and the function link entry is configured to trigger jumping from the title detail page to a function page corresponding to the function link entry.

In some embodiments, the title description information of the target video is truncated and presented on the preset title area, and the video processing method further comprises:
presenting the title description information truncated and presented on the preset title area completely on the title detail page.

In some embodiments, the title description information truncated and presented is key information of the target video, and the key information is a part of the title description information of the target video.

In some embodiments, the preset display style comprises a panel, and comment information of the target video is also presented on the title detail page.

In some embodiments, the panel comprises a panel displayed by sliding up from a bottom of the video playback page.

In some embodiments, the method further comprises:
displaying the title detail page, positioning and presenting the comment information on the title detail page, in response to a trigger operation on a comment control on the video playback page.

In some embodiments, the video processing method further comprises, after the displaying the title detail page, positioning and presenting the comment information on the title detail page, in response to the trigger operation on a comment control on the video playback page:
presenting an associated multimedia resource entry and at least one function link entry of the target video on the title detail page, in response to a preset trigger operation on the title detail page.

In some embodiments, the preset display style comprises a mask layer, and the displaying the title detail page according to the preset display style, in response to the trigger operation on the preset title area on the video playback page comprises:
displaying the title detail page in a style of the mask layer on the video playback page, in response to the trigger operation on the preset title area on the video playback page, wherein the mask layer is of a preset transparency and covers the video playback page, and the mask layer supports a longitudinal sliding operation, in response to hidden display content being provided on the title detail page.

In some embodiments, the video processing method further comprises, after the displaying the title detail page in the style of the mask layer on the video playback page, in response to the trigger operation on the preset title area on the video playback page:
closing the title detail page, in response to a trigger operation on a blank area on the mask layer or a preset closing control, or in response to a preset pull-down operation on the mask layer.

In some embodiments, the associated multimedia resource entry comprises a control corresponding to a video collection, the video collection comprises a plurality of videos, and the multimedia resource presentation page comprises a presentation page of the video collection.

In some embodiments, the function link entry comprises at least one of a positioning control or a combined photographing control, and the video processing method further comprises at least one of following: displaying a map around a location displayed by the positioning control on a function page corresponding to the positioning control, in response to a user triggering the positioning control; or displaying an image or a video combined photographed with a video played currently on a function page corresponding to the combined photographing control, in response to the user triggering the combined photographing control.

In a second aspect, the present disclosure provides video processing apparatus. The apparatus comprises:
a first display module configured to display a title detail page according to a preset display style, in response to a triggering operation on a preset title area on a video playback page, wherein title description information of a target video is presented on the preset title area; and
a first presentation module configured to present an associated multimedia resource entry and at least one function link entry of the target video on the title detail page, wherein the associated multimedia resource entry is configured to trigger jumping from the title detail page to a multimedia resource presentation page corresponding to the associated multimedia resource entry, the multimedia resource presentation page is configured to present a multimedia resource associated with the target video, and the function link entry is configured to trigger jumping from the title detail page to a function page corresponding to the function link entry.

In a third aspect, the present disclosure provides a computer-readable storage medium having instructions stored thereon that, when executed on a terminal device, cause the terminal device to implement the above-described method.

In a fourth aspect, the present disclosure provides a video processing device. The device comprises: a memory, a processor, and a computer program stored in the memory and executable on the processor, wherein the above-described method is implemented when the processor executes the computer program.

In a fifth aspect, the present disclosure provides a computer program product comprising a computer program/instructions that, when executed by a processor, implement the above-described method.

In a sixth aspect, the present disclosure provides a computer program. The program comprises: instructions that, when executed by a processor, cause the processor to perform the video processing method according to any of the embodiments of the present disclosure.

### BRIEF DESCRIPTION OF THE ACCOMPANYING DRAWINGS

The accompanying drawings here, which are incorporated into the specification and constitute part of this specification, show the embodiments conforming to the present disclosure and serve to explain the principles of the present disclosure together with the specification.

In order to explain the technical solution in the embodiments of the present disclosure or in the prior art more explicitly, the accompanying drawings required to be used in the description of the embodiments or the prior art will be briefly introduced below. Obviously, for those of ordinary skill in the art, other accompanying drawings may also be obtained according to these accompanying drawings on the premise that no inventive effort is involved.
Fig. 1 is a flowchart of a video processing method provided by some embodiments of the present disclosure;
Fig. 2 is a schematic view of a video playback page provided by some embodiments of the present disclosure;
Fig. 3 is a schematic view of a title detail page provided by some embodiments of the present disclosure;
Fig. 4 is a schematic view of another title detail page provided by some embodiments of the present disclosure;
Fig. 5 is a schematic view of a further title detail page provided by some embodiments of the present disclosure;
Fig. 6 is a schematic view of another video playback page provided by some embodiments of the present disclosure;
Fig. 7 is a schematic structural view of a video processing apparatus provided by some embodiments of the present disclosure;
Fig. 8 is a schematic structural view of a video processing device provided by some embodiments of the present disclosure.

### DETAILED DESCRIPTION

In order to understand the above-described objects, features and advantages of the present disclosure more explicitly, the solution of the present disclosure will be further described below. It is to be noted that, the embodiments of the present disclosure and the features in the embodiments may be combined with each other in the case where contradiction is absent.

In the following description, many specific details will be elaborated in order to adequately understand the present disclosure. However, the present disclosure may also be implemented in other methods than that described here. Apparently, the embodiments in the specification are only some of the embodiments of the present disclosure, rather than all of the embodiments.

The video playback page not only carries the function of video playback, but also carries the function of presenting the information related to the video. At present, the information displayed on the video playback page is diverse and complicated, which greatly affects the user's experience of video playback.

Therefore, how to improve the user's experience of video playback is an urgent technical problem to be solved at present.

Therefore, the embodiments of the present disclosure provide a video processing method. First of all, a title detail page according to a preset display style is displayed, in response to a triggering operation on a preset title area on a video playback page, wherein title description information of a target video is presented on the preset title area. Then, an associated multimedia resource entry and at least one function link entry of the target video are presented on the title detail page, wherein the associated multimedia resource entry is configured to trigger jumping from the title detail page to a multimedia resource presentation page corresponding to the associated multimedia resource entry, the multimedia resource presentation page is configured to present a multimedia resource associated with the target video, and the function link entry is configured to trigger jumping from the title detail page to a function page corresponding to the function link entry. In some embodiments, the associated multimedia resource entry and the at least one function link entry of the target video are presented on the title detail page, so that the display of the video playback page may be simplified on the premise of ensuring that the associated multimedia resource entry and the function link entry work effectively, thereby improving the user's experience of video playback based on the video playback page.

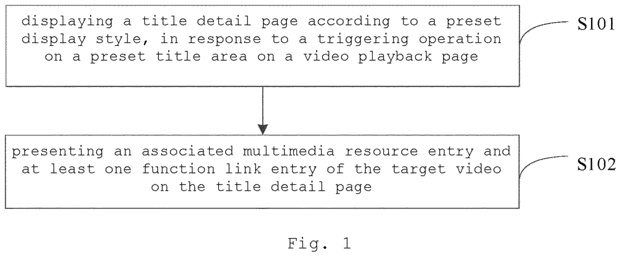

Based on this, the embodiments of the present disclosure provide a video processing method. Referring to Fig. 1 which is a flowchart of a video processing method provided by some embodiments of the present disclosure, and the method comprises the following steps.

In S101, displaying a title detail page according to a preset display style, in response to a triggering operation on a preset title area on a video playback page.

For example, the title description information of a target video is presented on the preset title area.

In some embodiments, the trigger operation may be an operation such as click, slide and long press, and the embodiments of the present disclosure are not limited to a type of the trigger operation.

In some embodiments, the target video may be any video in the video stream. For example, the target video may be a video played currently in the video stream. A preset title area set for the title of the target video in advance is provided on the video playback page, and the title description information related to the target video may be presented on the preset title area. The user may learn about a style and a type of the target video based on the title description information.

In some embodiments, the preset display style is a preset method of displaying the title detail page. For example, the preset display style may be a panel or a mask layer. The method of displaying the title detail page by the panel or the mask layer is described below, which not be explained in detail here.

In some embodiments, the user clicks on the preset title area on the video playback page, and the title detail page may be displayed by the mothed of the panel or the mask layer. The content presented on the title detail page is a further detailed description of and supplement to the content displayed on the video playback page.

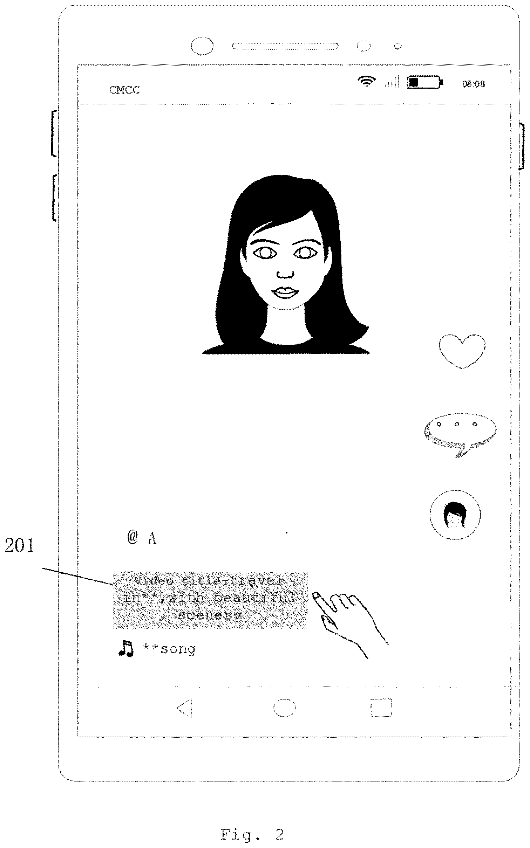

Fig. 2 is a schematic interface view of a video playback page provided by some embodiments of the present disclosure. As shown in Fig. 2, a preset title area (201) is set in advance on the video playback page, the preset title area is displayed in the left lower corner of the video playback page, and the title description information "travel in**, with beautiful scenery" is presented on the preset title area. In some embodiments, the user name, creator avatar, music, likes and comments of the creator may also be displayed on the video playback page. The user clicks on the preset title area on the video playback page, and the title detail page may be displayed by the method of the panel or the mask layer.

In some embodiments, the title description information of the target video is truncated and presented in a preset title area. The title description information truncated and presented on the preset title area may be completely presented on the title detail page. For example, in order to prevent the title description information of the target video from occupying a large area on the preset title area, only the title description information indicating the key information of the target video is presented on the preset title area. For example, the key information is a part of the complete title description information. In response to the user clicking on the preset title area, the complete title description information on the preset title area may be completely presented on the title detail page, which may improve the user's experience of video playback based on the video playback page.

In some embodiments, the user clicks on the preset title area on the video playback page, and the title detail page may be displayed by the method of the panel. For example, the title description information indicating the key information of the target video is presented on the preset title area. In response to the user triggering the preset title area, the complete title description information on the preset title area may be presented on the title detail page.

In some embodiments, the title detail page may be displayed in the style of a panel, and the panel may slide up from the bottom of the video playback page for display. Concurrently, the target video may continue to be played on the video playback page, that is, the title detail page displayed in the style of a panel does not affect the playback of the target video.

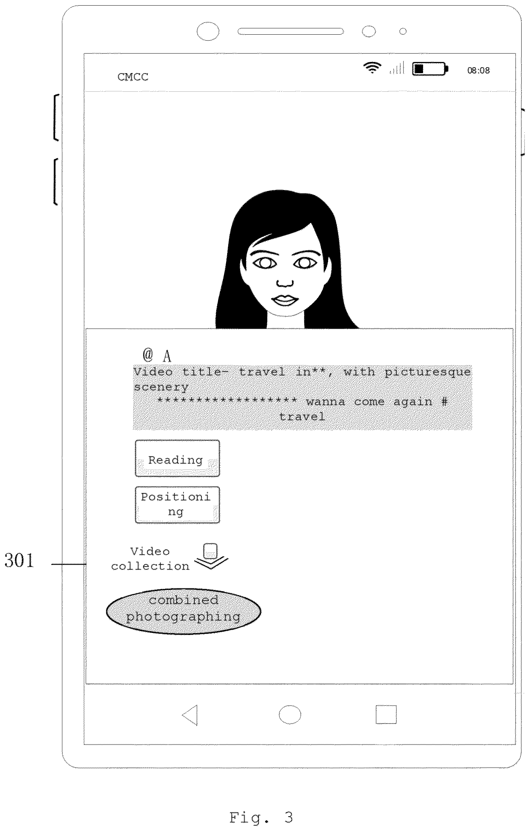

Fig. 3 is a schematic interface view of a title detail page provided by some embodiments of the present disclosure. As shown in Fig. 3, the title detail page is displayed in the form of a bottom panel (301); the complete title description information on the preset title area is presented on the title detail page. The complete title description information is "travel in **, with picturesque scenery, and ** wanna come again". The video title area may also display a style type to which the target video belongs. For example, the target video shown in Fig. 3 belongs to a travel video.

In some embodiments, in response to a trigger operation on a preset title area on a video playback page, a title detail page is displayed in a style of a mask layer on the video playback page. The mask layer is of a preset transparency and covers the video play page, and the mask layer supports a longitudinal sliding operation.

For example, the user clicks on the preset title area on the video playback page, and the title detail page may be displayed by a method of a mask layer. The mask layer covers the video playback page. Since the display of the mask layer is of a certain transparency, the display of the title detail page in a style of a mask layer on the video playback page does not affect the playback of the target video.

In some embodiments, the mask layer supports a longitudinal sliding operation in response to hidden display content being provided on the title detail page. For example, on the title detail page displayed in a style of a mask layer, in response to the hidden display content is provided, the user may slide the mask layer longitudinally to present the hidden display content on the title detail page.

In some embodiments, after the title detail page is displayed in a style of a mask layer on the video playback page, the title detail page may be closed in response to a trigger operation on a blank area on the mask layer or a preset closing control, or in response to a preset pull-down operation on the mask layer. For example, in response to the user needs to exit the title detail page displayed on the mask layer, the title detail page may be closed by clicking on the blank area on the mask layer or clicking on the closing control. The user may also close the title detail page by triggering a pull-down operation.

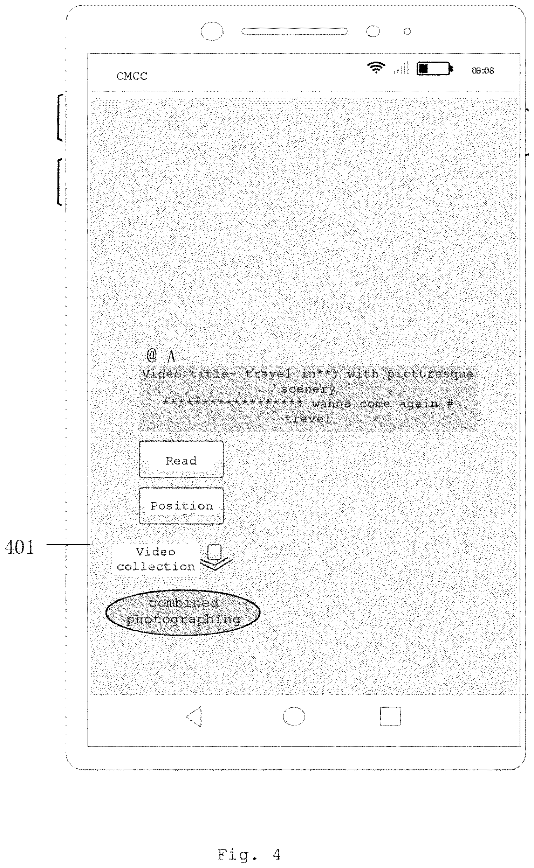

Fig. 4 is a schematic interface view of another title detail page provided by some embodiments of the present disclosure. As shown in Fig. 4, the title detail page is displayed in a style of a mask layer (401), the complete title description information on the preset title area is presented on the title detail page, and the complete title description information is the same as the complete title description information shown in Fig. 3. As shown in Fig. 4, the user may close the title detail page by any operation of clicking on the blank area on the mask layer, clicking on the closing control or triggering a pull-down operation.

In S102, presenting an associated multimedia resource entry and at least one function link entry of the target video on the title detail page.

For example, the associated multimedia resource entry is configured to trigger jumping from the title detail page to a multimedia resource presentation page corresponding to the associated multimedia resource entry, the multimedia resource presentation page is configured to present a multimedia resource associated with the target video, and the function link entry is configured to trigger jumping from the title detail page to a function page corresponding to the function link entry.

Compared with the prior art, the technical solution provided by the embodiments of the present disclosure has at least the following advantages:

The embodiments of the present disclosure provide a video processing method. First of all, a title detail page according to a preset display style is displayed, in response to a triggering operation on a preset title area on a video playback page, wherein title description information of a target video is presented on the preset title area. Then, an associated multimedia resource entry and at least one function link entry of the target video are presented on the title detail page, wherein the associated multimedia resource entry is configured to trigger jumping from the title detail page to a multimedia resource presentation page corresponding to the associated multimedia resource entry, the multimedia resource presentation page is configured to present a multimedia resource associated with the target video, and the function link entry is configured to trigger jumping from the title detail page to a function page corresponding to the function link entry. In some embodiments, the associated multimedia resource entry and the at least one function link entry of the target video are presented on the title detail page, so that the display of the video playback page may be simplified on the premise of ensuring that the associated multimedia resource entry and the function link entry work effectively, thereby improving the user's experience of video playback based on the video playback page.

In some embodiments, the user clicks on the preset title area to display the title detail page to jump from the video playback page to the title detail page, wherein the title detail page presents an associated multimedia resource entry and at least one function link entry of the target video, so that the title detail page can carry part of the information presentation function of the video playback page. The user triggers the control corresponding to an associated multimedia resource entry of the target video presented on the title detail page or the control corresponding to one of the function link entries, so that it may be implemented to jump from the title detail page to the multimedia resource presentation page or the function page. In this way, an associated multimedia resource entry and at least one function link entry of the target video are displayed on the title detail page, so that the title detail page can carry part of the information presentation function of the video playback page, thereby simplifying the video playback page.

In some embodiments, the associated multimedia resource entry is related to the extended consumption content, and the extended consumption content related to the target video is carried through the associated multimedia resource entry. For example, the extended consumption content may be reading, hot spots, video collections, searching, short dramas and the like related to the target video. An exemplary description is made below with such an example that the associated multimedia resource entry is a video collection. The video collection is a collection that comprises a plurality of videos, for example, a TV series video collection, a video collection with related content shot by the same creator, and the like. Assuming that the user triggers the control corresponding to the video collection, the title detail page jumps to the video collection presentation page, and the multimedia resources associated with the target video are presented on the video collection presentation page. For example, the video collection presentation page is a multimedia resource presentation page.

As shown in Fig. 3, a title detail page is displayed in the form of a bottom panel, and a video collection is presented on the title detail page. Assuming that the user triggers the control corresponding to the video collection, the title detail page jumps to the video collection presentation page, and other videos shot by the same creator are presented on the video collection presentation page.

In some embodiments, the function link entry is related to the service function, and the service is carried through the function link entry. For example, service functions such as combined photographing and positioning have corresponding function link entries. Assuming that the user triggers the control corresponding to the function link entry, the title detail page jumps to the function page corresponding to the function link entry, and the service function may be displayed on a function page corresponding to the function link entry. Assuming that the user triggers the positioning control on the title detail page, the map around a location displayed by the positioning control may be displayed on the function page. Assuming that the user triggers the combined photographing control in the title detail page, the image or video combined photographed with the currently playing video may be displayed on the function page.

In some embodiments, in order to improve the user's experience of video playback based on the video playback page, the control corresponding to the video collection and the control corresponding to the combined photographing may also be displayed on the video playback page. By clicking on the preset title area on the video playback page, the user may display the title detail page by a panel or mask layer, and display the corresponding controls such as reading, hot spots, searching and short dramas on the title detail page.

The embodiments of the present disclosure provide a video processing method. First of all, a title detail page is displayed according to a preset display style in response to a trigger operation on a preset title area on a video playback page, wherein the title description information of the target video is presented on the preset title area. Then, an associated multimedia resource entry and at least one function link entry of the target video are presented on the title detail page, wherein the associated multimedia resource entry is configured to trigger jumping from the title detail page to the multimedia resource presentation page corresponding to the associated multimedia resource entry, the multimedia resource presentation page is configured to present a multimedia resource associated with the target video, and the function link entry is configured to trigger jumping from the title detail page to the function page corresponding to the function link entry. It can be seen that, in the embodiments of the present disclosure, an associated multimedia resource entry and at least one function link entry of the target video are presented on the title detail page, so that the title detail page may carry part of the information presentation function of the video playback page, thereby improving the user's experience of video playback based on the video playback page.

In order to facilitate understanding the video processing method provided by the present disclosure, on the basis of the above-described embodiments, the present disclosure provides another video processing method. In some embodiments, a title detail page may be displayed in the form of a panel, wherein the title detail page also presents the comment information of the target video. For example, in response to a trigger operation on a comment control on the video playback page, the title detail page is displayed, and the comment information is positioned and presented on the title detail page.

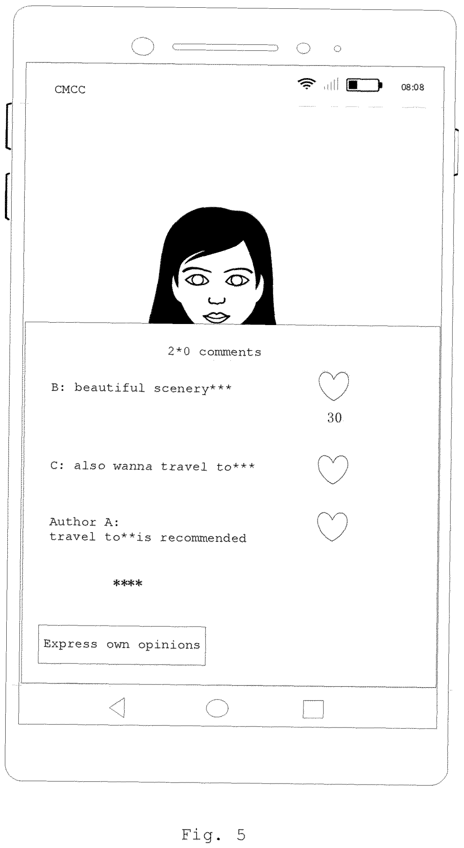

In some embodiments, as shown in Fig. 1, the video playback page also presents the comment control, and the user triggers the comment control displayed on the video playback page, the title detail page may be displayed in the form of a bottom panel, and all the comment information related to the target video may be directly positioned and presented on the title detail page. For example, the comment information of the target video may be shown in Fig. 5, which is a schematic interface view of another title detail page provided by some embodiments of the present disclosure. The title detail page shown in Fig. 5 may display the number of comments, comments by different users on the target video, opinions expressed by the author, and may also display opinions expressed by a user on the target video or opinions on certain comment information. Likes and the number of likes on the comment information may also be displayed.

In some embodiments, since the title detail page can carry the presentation function corresponding to the comment control of the video playback page, all the comment information related to the target video is not displayed on the video playback page, which simplifies the video playback page. The user may also view, like and express opinions on the target video or opinions on certain comment information for the comment information presented on the title detail page, which improves the user's use experience of the title detail page and further improves the user's experience of video playback based on the video playback page.

In some embodiments, after positioning and presenting the comment information on the title detail page, an associated multimedia resource entry and at least one function link entry of the target video are presented on the title detail page in response to a preset trigger operation on the title detail page. For example, the user may trigger the closing control on the comment information presented on the title detail page, so that the comment information presented on the title detail page may be closed, and the title detail page returns to a state of presenting an associated multimedia resource entry and at least one function link entry of the target video. Alternatively, the user may trigger an area on the title detail page where the comment information is not displayed. For example, in response to the user clicks on an area other than the bottom panel, the comment information presented on the title detail page may be automatically closed to return to a state of presenting an associated multimedia resource entry and at least one function link entry of the target video.

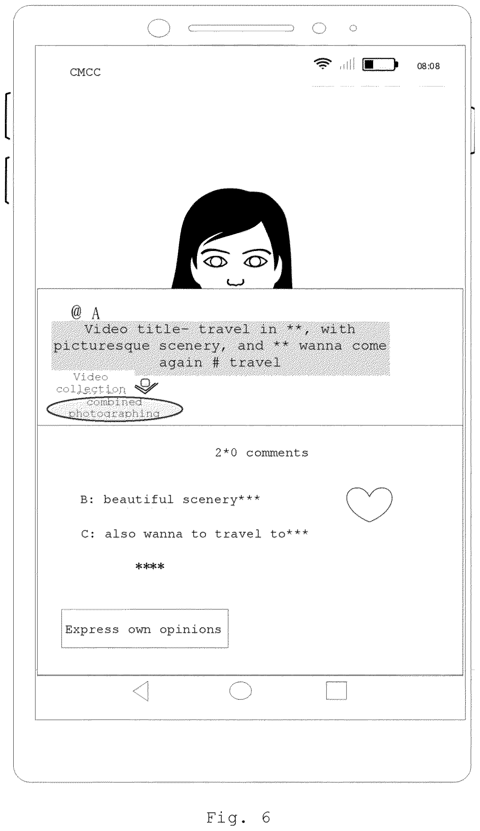

In some embodiments, on the title detail page shown in Fig. 5 above, the user triggers a downward sliding operation, so that the information such as a folded video title, and an associated multimedia resource entry and at least one function link entry of the target video may be displayed. For example, the display content is shown in Fig. 6. Fig. 6 is a schematic interface view of another title detail page provided by some embodiments of the present disclosure. As shown in Fig. 6, the title detail page presents video title information, a video collection, combined photographing and all the comment information.

In some embodiments, the user clicks on the preset title area, and the title detail page is displayed. The title detail page presents all the comment information, an associated multimedia resource entry, at least one function link entry and the like of the target video. For example, when the user clicks on the title area shown in Fig. 2, the video title information, a video collection, combined photographing and all the comment information shown in Fig. 6 may be directly displayed.

In the video processing method provided by the embodiments of the present disclosure, an associated multimedia resource entry, at least one function link entry and all the comment information of the target video are presented on the title detail page, so that the title detail page can carry part of the function of presenting information and comments corresponding to the associated multimedia resource entry and the function link entry of the video playback page, thereby improving the user's experience of video playback based on the video playback page.

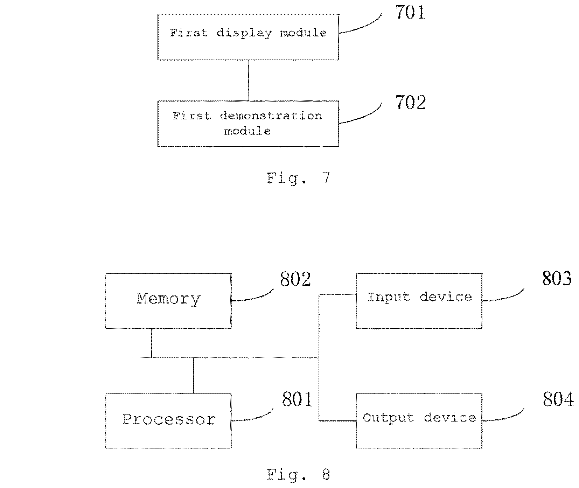

Based on the above-described method embodiments, the present disclosure also provides a video processing apparatus, and referring to Fig. 7, which is a schematic structural view of a video processing device provided by the embodiments of the present disclosure, the apparatus comprises:
a first display module 701 configured to display a title detail page according to a preset display style in response to a trigger operation on a preset title area on a video playback page, wherein the title description information of a target video is presented on the preset title area; and
a first presentation module 702 configured to present an associated multimedia resource entry and at least one function link entry of the target video on the title detail page, wherein the associated multimedia resource entry is configured to trigger jumping from the title detail page to the multimedia resource presentation page corresponding to the associated multimedia resource entry, the multimedia resource presentation page is configured to present a multimedia resource associated with the target video, and the function link entry is configured to trigger jumping from the title detail page to the function page corresponding to the function link entry.

In some embodiments, the title description information of the target video is truncated and presented on the preset title area, and the apparatus further comprises:
a second presentation module configured to completely present the title description information truncated and presented on the preset title area on the title detail page.

In some embodiments, the preset display style comprises a panel, and the apparatus further comprises:
a third presentation module configured to present the comment information of the target video on the title detail page.

In some embodiments, the apparatus further comprises:
a fourth presentation module configured to present the title detail page in response to a trigger operation on a comment control on the video playback page, and position and display the comment information on the title detail page.

In some embodiments, the apparatus further comprises:
a fifth presentation module configured to present an associated multimedia resource entry and at least one function link entry of the target video on the title detail page in response to a preset trigger operation on the title detail page.

In some embodiments, the preset display style comprises a mask layer, and the first display module is configured to:
display a title detail page in a style of a mask layer on the video playback page in response to a trigger operation of a preset title area on the video playback page; wherein the mask layer is of a preset transparency and covers the video playback page, and the mask layer supports a longitudinal sliding operation in response to hidden display content being provided on the title detail page.

In some embodiments, the apparatus further comprises:
a closing module configured to close the title detail page in response to a trigger operation on a blank area on the mask layer or a preset closing control, or in response to a preset pull-down operation on the mask layer.

In some embodiments, the truncated and presented title description information is the key information of the target video, and the key information is a part of the title description information of the target video.

In some embodiments, the panel comprises a panel displayed by sliding up from a bottom of the video playback page.

In some embodiments, the associated multimedia resource entry comprises a control corresponding to a video collection, the video collection comprises a plurality of videos, and the multimedia resource presentation page comprises a presentation page of the video collection.

In some embodiments, the function link entry comprises at least one of a positioning control or a combined photographing control, and the first presentation module 702 performs at least one of the following: displaying a map around a location displayed by the positioning control on a function page corresponding to the positioning control in response to a user triggering the positioning control; or displaying an image or video combined photographed with a video played currently on a function page corresponding to the combined photographing control in response to the user triggering the combined photographing control.

In the video processing apparatus provided by the embodiment of the present disclosure, first of all, a title detail page is displayed according to a preset display style in response to a trigger operation on a preset title area on a video playback page. Wherein, the title description information of the target video is presented on the preset title area. Then, an associated multimedia resource entry and at least one function link entry of the target video are presented on the title detail page. Wherein, the associated multimedia resource entry is configured to trigger jumping from the title detail page to the multimedia resource presentation page corresponding to the associated multimedia resource entry, the multimedia resource presentation page is configured to present a multimedia resource associated with the target video, and the function link entry is configured to trigger jumping from the title detail page to the function page corresponding to the function link entry. In some embodiments, the associated multimedia resource entry and the at least one function link entry of the target video are presented on the title detail page, so that the display of the video playback page may be simplified on the premise of ensuring that the associated multimedia resource entry and the function link entry are normally operable, thereby improving the user's experience of video playback based on the video playback page.

In addition to the above-described method and apparatus, the embodiments of the present disclosure also provide a computer-readable storage medium having instructions stored therein that, when executed on a terminal device, cause the terminal device to implement the video processing method according to the embodiment of the present disclosure.

The embodiments of the present disclosure also provide a computer program product comprising a computer program/instructions that, when executed by a processor, implement the video processing method according to the embodiment of the present disclosure.

The embodiments of the present disclosure also provide a computer program comprising instructions that, when executed by a processor, cause the processor to perform a video processing method according to any of the embodiments of the present disclosure.

In addition, the embodiments of the present disclosure also provide a video processing device, as shown in Fig. 8, which may comprises:
a processor 801, a memory 802, an input device 803 and an output device 804. The number of processors 801 during video processing may be one or more, and Fig. 8 takes one processor as an example. In some embodiments of the present disclosure, the processor 801, the memory 802, the input device 803 and the output device 804 may be connected through a bus or other methods, wherein Fig. 8 takes the connection through a bus as an example.

The memory 802 may be used to store software programs and modules, and the processor 801 executes various functional applications and data processing of the video processing device by running the software programs and modules stored in the memory 802. The memory 802 may mainly comprise a storage program area and a storage data area, wherein the storage program area may store an operating system, an application program required by at least one function, and the like. In addition, the memory 802 may comprise a high-speed random access memory, and may also comprise a nonvolatile memory, for example, at least one disk memory device, a flash memory device, or other volatile solid-state memory devices. The input device 803 may be used to receive the input digital or character information and generate a signal input related to a user setting and function control of the video processing device.

In the embodiments, the processor 801 may load executable files corresponding to the processes of one or more application programs into the memory 802 according to the following instructions, and the processor 801 may run the application programs stored in the memory 802 so as to realize various functions of the above-described video processing device.

It is to be noted that, the relational terms such as "first" and "second" herein are only used to distinguish one entity or operation from another entity or operation, but do not necessarily require or imply any such actual relationship or sequence present between these entities or operations. Moreover, the terms "comprising", "comprising" or any other variation thereof are intended to cover non-exclusive inclusions, so that a process, method, article or device comprising a series of elements comprises not only those elements, but also other elements not explicitly listed or elements inherent to such process, method, article or device. In the case where there are no more restrictions, an element defined by the phrase "comprising one..." does not exclude an additional identical element also present in the process, method, article or device comprising the element.

The above content only pertains to a detailed description of the present disclosure, so that those skilled in the art may understand or realize the present disclosure. Multiple modifications to these embodiments will be obvious for those skilled in the art, and the general principles defined herein may be realized in other embodiments without departing from the spirit or scope of this disclosure. Therefore, the present disclosure will not be limited to these embodiments described herein, but intended to conform to the broadest scope consistent with the principles and novel features disclosed herein.

## Claims

1. A video processing method, comprising:
displaying a title detail page according to a preset display style, in response to a triggering operation on a preset title area on a video playback page, wherein title description information of a target video is presented on the preset title area; and
presenting an associated multimedia resource entry and at least one function link entry of the target video on the title detail page, wherein the associated multimedia resource entry is configured to trigger jumping from the title detail page to a multimedia resource presentation page corresponding to the associated multimedia resource entry, the multimedia resource presentation page is configured to present a multimedia resource associated with the target video, and the function link entry is configured to trigger jumping from the title detail page to a function page corresponding to the function link entry.

2. The video processing method according to claim 1, wherein the title description information of the target video is truncated and presented on the preset title area, and
the video processing method further comprises:
presenting the title description information truncated and presented on the preset title area completely on the title detail page.

3. The video processing method according to claim 2, wherein the title description information truncated and presented is key information of the target video, and the key information is a part of the title description information of the target video.

4. The video processing method according to any of claims 1 to 3, wherein the preset display style comprises a panel, and comment information of the target video is also presented on the title detail page.

5. The video processing method according to claim 4, wherein the panel comprises a panel displayed by sliding up from a bottom of the video playback page.

6. The video processing method according to claim 4 or 5, further comprising:
displaying the title detail page, positioning and presenting the comment information on the title detail page, in response to a trigger operation on a comment control on the video playback page.

7. The video processing method according to claim 6, further comprising, after the displaying the title detail page, positioning and presenting the comment information on the title detail page, in response to the trigger operation on a comment control on the video playback page:
presenting an associated multimedia resource entry and at least one function link entry of the target video on the title detail page, in response to a preset trigger operation on the title detail page.

8. The video processing method according to any of claims 1 to 7, wherein the preset display style comprises a mask layer, and
the displaying the title detail page according to the preset display style, in response to the trigger operation on the preset title area on the video playback page comprises:
displaying the title detail page in a style of the mask layer on the video playback page, in response to the trigger operation on the preset title area on the video playback page, wherein the mask layer is of a preset transparency and covers the video playback page, and the mask layer supports a longitudinal sliding operation, in response to hidden display content being provided on the title detail page.

9. The video processing method according to claim 8, further comprising, after the displaying the title detail page in the style of the mask layer on the video playback page, in response to the trigger operation on the preset title area on the video playback page:
closing the title detail page, in response to a trigger operation on a blank area on the mask layer or a preset closing control, or in response to a preset pull-down operation on the mask layer.

10. The video processing method according to any of claims 1 to 9, wherein the associated multimedia resource entry comprises a control corresponding to a video collection, the video collection comprises a plurality of videos, and the multimedia resource presentation page comprises a presentation page of the video collection.

11. The video processing method according to any of claims 1 to 9, wherein the function link entry comprises at least one of a positioning control or a combined photographing control, and
the video processing method further comprises at least one of following:
displaying a map around a location displayed by the positioning control on a function page corresponding to the positioning control, in response to a user triggering the positioning control; or
displaying an image or a video combined photographed with a video played currently on a function page corresponding to the combined photographing control, in response to the user triggering the combined photographing control.

12. A video processing apparatus, comprising:
a first display module configured to display a title detail page according to a preset display style, in response to a triggering operation on a preset title area on a video playback page, wherein title description information of a target video is presented on the preset title area; and
a first presentation module configured to present an associated multimedia resource entry and at least one function link entry of the target video on the title detail page, wherein the associated multimedia resource entry is configured to trigger jumping from the title detail page to a multimedia resource presentation page corresponding to the associated multimedia resource entry, the multimedia resource presentation page is configured to present a multimedia resource associated with the target video, and the function link entry is configured to trigger jumping from the title detail page to a function page corresponding to the function link entry.

13. A computer-readable storage medium having instructions stored thereon that, when executed on a terminal device, cause the terminal device to implement a video processing method according to any of claims 1 to 11.

14. A video processing device, comprising: a memory, a processor, and a computer program stored in the memory and executable on the processor, wherein a video processing method according to any of claims 1 to 11 is implemented when the processor executes the computer program.

15. A computer program product comprising a computer program/instructions that, when executed by a processor, implement a video processing method according to any of claims 1 to 11.

16. A computer program comprising:
instructions that, when executed by a processor, cause the processor to perform a video processing method according to any of claims 1 to 11.
